# EUROPEAN PATENT APPLICATION

(11) **EP 4 350 843 A1**
(43) Date of publication of application: **10.04.2024**
(21) Application number: 22815851.5
(22) Date of filing: 18.05.2022
(51) Int. Cl.: H01M 10/613, H01M 10/615, H01M 10/617, H01M 10/627, H01M 10/654, H01M 10/6557, H01M 10/6563, H01M 10/6571, H01M 10/658

(54) **UNIT BATTERY AND MODULE BATTERY FOR HIGH-TEMPERATURE-OPERATION SECONDARY BATTERY**

(30) Priority: 31.05.2021 JP 2021090970
(71) Applicant: NGK Insulators, Ltd., Nagoya-shi, Aichi 467-8530 (JP)
(72) Inventor: FUKUHARA, Motohiro, Nagoya-shi, Aichi 467-8530 (JP)
(74) Representative: Mewburn Ellis LLP
(86) International application number: PCT/JP2022/020618
(87) International publication number: WO 2022/255099

(57) **Abstract**

The uniformity of the temperatures in a module battery for a high-temperature operating secondary battery is ensured. A battery cell that is a high-temperature operating secondary battery includes: a cylindrical main body including a positive part and a negative part; a sheath annularly sheathing the main body, the sheath including at least a cylindrical metal part and an insulating part annularly sheathing an external side surface of the metal part; and a coil of a conductive wire rod wound around an external side surface of the insulating part.

## Description

### TECHNICAL FIELD

The present invention relates to a high-temperature operating secondary battery and a module battery obtained by connecting multiple high-temperature operating secondary batteries, and is particularly directed to a structure for controlling the temperatures of the high-temperature operating secondary battery and the module battery.

### BACKGROUND ART

Sodium-sulfur battery (hereinafter referred to as NaS battery) has already been known as a storage battery to be connected to electric power systems and used. A single NaS battery (battery cell) is generally a high-temperature operating secondary battery with a structure of containing, in an isolated manner, metallic sodium (Na) and sulfur (S) that are active materials in a cell (battery enclosure) using beta-alumina that is a solid electrolyte with Na ion conductivity as a separator. The operating temperature is approximately 300°C. Electrochemical reaction of both of the active materials in a molten (liquid) state at the operating temperature generates electromotive force in the battery cell.

The NaS battery is normally used in a form of a module battery including a plurality of battery cells (a battery assembly) connected together and contained in a heat-insulating storage container to secure a desired capacity and a desired output (see, for example, Patent Document 1). In the module battery, a plurality of blocks are connected in series. Each of the blocks includes a plurality of circuits (strings) connected in parallel, and each of the circuits includes a plurality of battery cells connected in series.

There is a general need to increase more output of a module battery for NaS battery constituted by a plurality of battery cells and operate the module battery for a longer time than the conventional ones. If this is implemented by the conventional module battery including a plurality of strings connected in parallel as disclosed in, for example, Patent Document 1, this could be seemingly easily satisfied by increasing the number of battery cells (the number of direct connections) included in a string or increasing the number of blocks.

The module battery with the conventional structure as disclosed in Patent Document 1, however, sometimes has difficulty in adapting to increasing output due to the following reasons.

First, the module battery generally needs to heat the battery cells to maintain the active materials in the battery cells in the molten state during standby, and also to promptly expel the heat generated by reaction of the active materials during operation (in charge/discharge). In the module battery disclosed in Patent Document 1, a storage container of battery cells not only has a heat insulated structure and includes heaters disposed on the bottom surface and the inner side surface, but also includes a fan and a duct for exhausting the heat to meet the requirement. A plurality of the battery cells are two-dimensionally contained in the storage container with the aforementioned structure in such a manner that multiple (three or more) battery cells are arranged per row and column.

If one attempts to increase output more than the conventional module batteries through upsizing the storage container and increasing the number of contained battery cells while preserving the similar structures, it is difficult to maintain the uniformity of the temperature distribution in the storage container. Specifically, the more the amount of heat generated in the storage container during operation (in charge/discharge) increases through increase in the output, the more difficult exhausting heat from the center of the storage container becomes, and the higher the temperature at the center becomes than that at the edge. In this case, the battery cell disposed at the center of the storage container becomes higher in temperature than that disposed at the edge, thereby to reach the allowable temperature earlier due to the heat of reaction in discharge and the current conduction heating. Furthermore, since the battery cell disposed at the edge of the storage container is lower in temperature than that disposed at the center, chemical internal resistance thereof. Thus, when a module battery includes an upsized storage container and a larger number of contained battery cells arranged in the conventional manner, the conducting currents in the respective rows become non-uniform, and the effective use of held electrical quantity is hampered. Even during standby in which the heaters heat the battery cells to maintain high temperatures, it is difficult to make the temperature distribution uniform throughout the interior of the storage container.

### PRIOR ART DOCUMENT

### PATENT DOCUMENT

Patent Document 1: WO2015/056739

### SUMMARY

The present invention has been conceived in view of the problem, and the object is to provide a technology for stably ensuring the uniformity of the temperatures in a module battery for a high-temperature operating secondary battery.

A first aspect of the present invention to solve the problem is a battery cell that is a high-temperature operating secondary battery and includes: a cylindrical main body including a positive part and a negative part; a sheath annularly sheathing the main body, the sheath including at least a cylindrical metal part and an insulating part annularly sheathing an external side surface of the metal part; and a coil of a conductive wire rod wounding around an external side surface of the insulating part.

A second aspect of the present invention is the battery cell according to the first aspect, wherein the metal part has a two-layer structure including: an inner pipe being in contact with an external side surface of the main body to constrain deformation of the main body; and an external pipe being in contact with an external side surface of the inner pipe, and in the metal part, at least the external pipe is configured to be induction-heated by allowing a high-frequency AC current to pass between both ends of the coil.

A third aspect of the present invention is the battery cell according to the first or second aspect, wherein the wire rod is a hollow pipe made of a metal.

A fourth aspect of the present invention is a module battery for a high-temperature operating secondary battery, the module battery including: a storage container with a heat insulated structure; a plurality of battery cells contained in the storage container, each of the plurality of battery cells being the battery cell according to any one of the first to third aspects; and at least one high-frequency AC current generator allowing a high-frequency AC current to pass through the coil included in each of the plurality of battery cells, wherein the metal parts are induction-heated by allowing the high-frequency AC current to pass through the coils using the at least one high-frequency AC current generator, and all the plurality of battery cells are adjacent to the storage container in the storage container.

A fifth aspect of the present invention is a module battery for a high-temperature operating secondary battery, the module battery including: a storage container with a heat insulated structure; a plurality of battery cells contained in the storage container, each of the plurality of battery cells being the battery cell according to the third aspect; at least one high-frequency AC current generator allowing a high-frequency AC current to pass through the coil included in each of the plurality of battery cells; a duct affixed to a side of the storage container; and a blower that can supply a cooled gas to the duct, wherein the metal parts are induction-heated by allowing the high-frequency AC current to pass through the coils using the at least one high-frequency AC current generator, one end of the coil penetrates the side of the storage container to extend into the duct, the other end of the coil penetrates the side of the storage container to extend outside, and circulation of the cooled gas supplied by the blower through inside the coil exhausts heat generated by each of the plurality of battery cells.

A sixth aspect of the present invention is the module battery according to the fifth aspect, wherein all the plurality of battery cells are adjacent to the storage container in the storage container.

According to the first to third aspects of the present invention, when a module battery includes a plurality of battery cells contained in a storage container, the respective battery cells can be independently heated by allowing a high-frequency AC current to pass between both ends of the coils to induction-heat the metal parts. Accordingly, with induction-heating of a metal source included in each of the battery cells, the uniformity of the temperatures in the battery cells in the storage container can be stably ensured during standby of the module battery in which the battery cells need to be maintained at high temperatures.

Particularly, according to the third aspect, when a module battery includes a plurality of battery cells contained in a storage container, a predetermined fluid can be circulated between both ends of the pipe of the coil included in each of the battery cells. Thus, circulation of a cooled gas through the pipe can independently cool the battery cells. With this circulation in charge/discharge of the module battery that needs to exhaust the heat generated by reaction of the active materials in the battery cells outside, the uniformity of the temperatures in the battery cells in the storage container can be stably ensured.

According to the fourth aspect of the present invention, the battery cells can be independently heated in the module battery. Accordingly, with induction-heating of a metal source included in each of the battery cells, the uniformity of the temperatures in the battery cells in the storage container can be stably ensured during standby of the module battery in which the battery cells need to be maintained at high temperatures. Furthermore, in the case that the temperatures of the respective battery cells are individually measured with thermocouples provided therein, the respective battery cells can be individually controlled.

According to the fifth to sixth aspects of the present invention, circulation of a cooled gas through the pipe of the coil included in each of the battery cells in the module battery can independently cool the battery cells. With this circulation in charge/discharge of the module battery that needs to exhaust the heat generated by reaction of the active materials in the battery cells outside, the uniformity of the temperatures in the battery cells in the storage container can be stably ensured.

Furthermore, according to the fourth to sixth aspects of the present invention, since the module battery does not include any battery cell enclosed by only the other battery cells, the module battery structurally has no problem in that a battery cell disposed at an outer edge and a battery cell disposed at a center inside a storage container have a temperature difference. This can establish the uniformity of the temperatures in the storage container more stably.

### BRIEF DESCRIPTION OF DRAWINGS

FIG. 1 is a side view illustrating a schematic structure of a battery cell 1.
FIG. 2 is a plan view illustrating the schematic structure of the battery cell 1.
FIG. 3 is a plan view illustrating a schematic structure of a module battery 100.
FIG. 4 is a side view illustrating the schematic structure of the module battery 100.
FIG. 5 is a block diagram regarding temperature control of the module battery 100.

### DESCRIPTION OF EMBODIMENTS

### <Structures of battery cell and module battery>

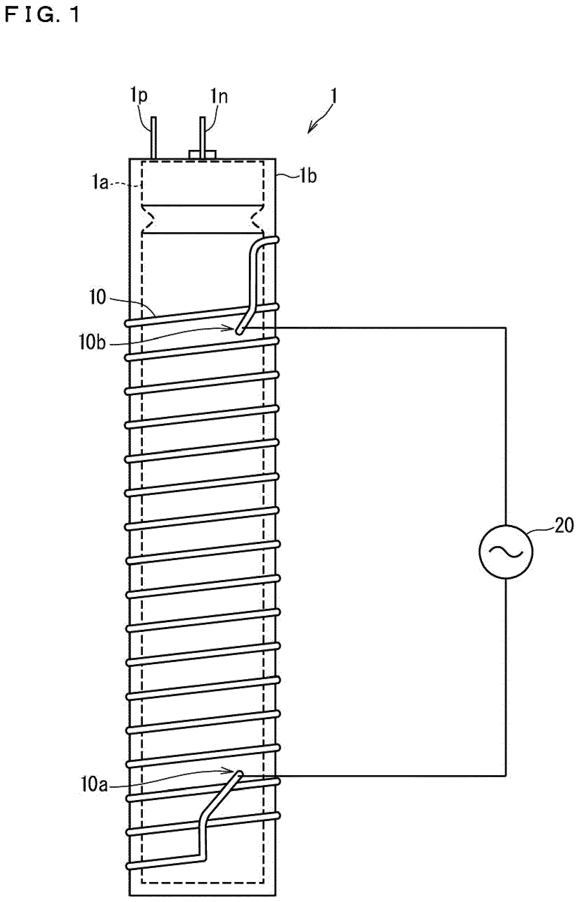

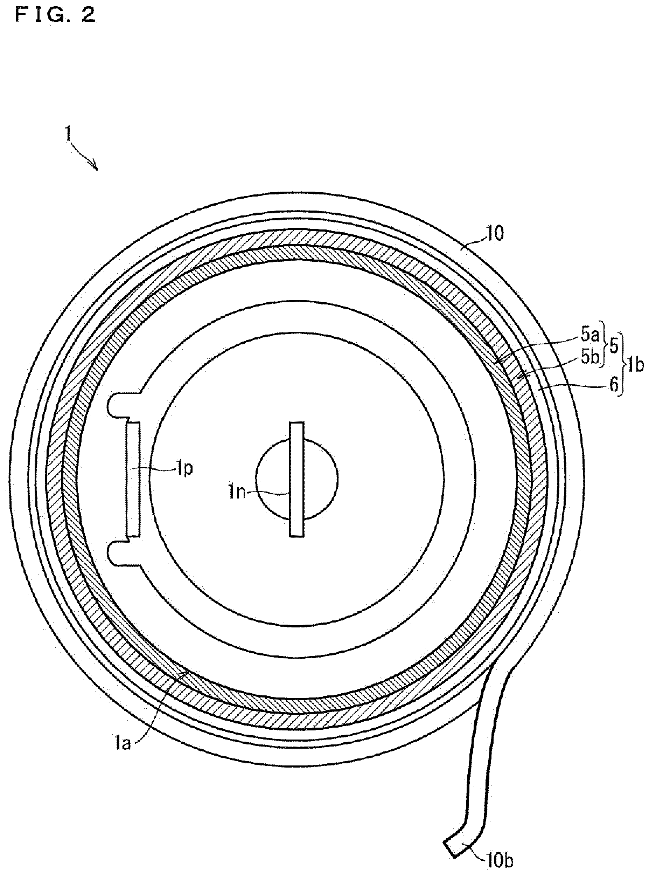

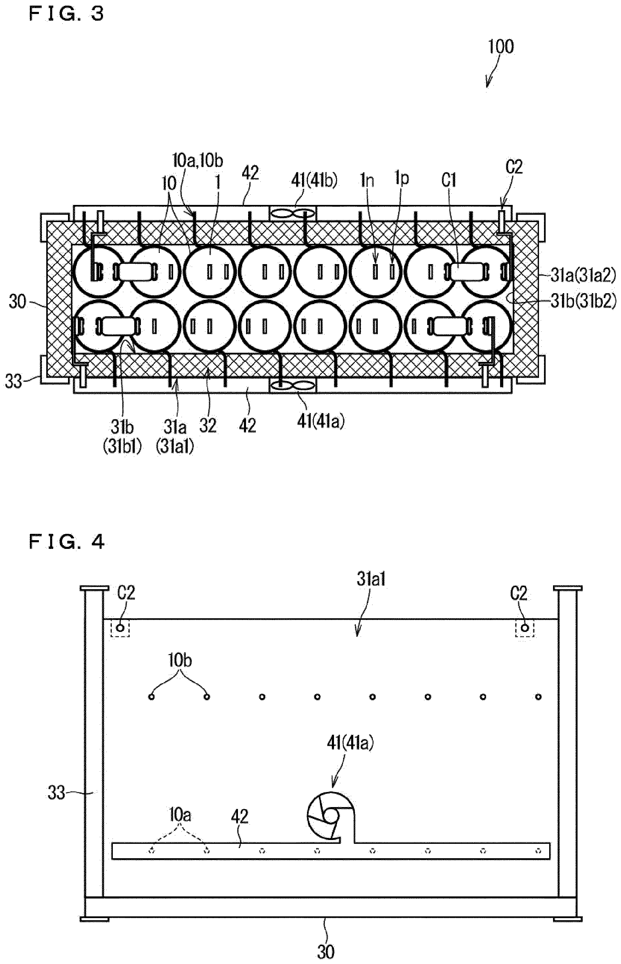

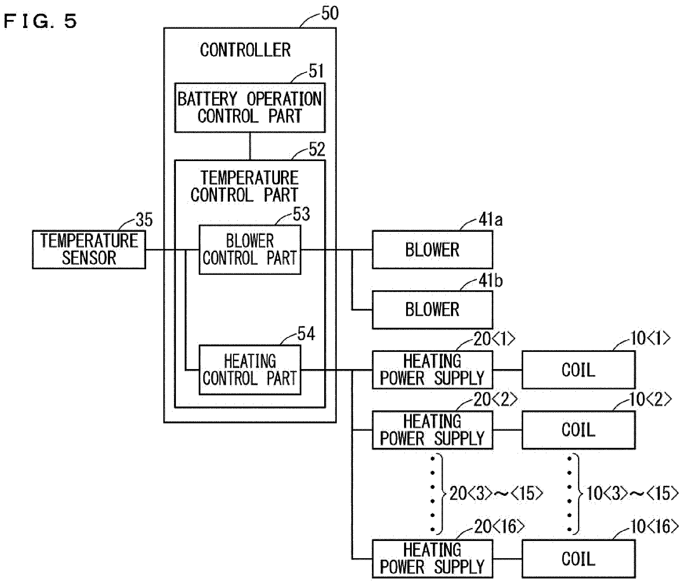

FIG. 1 and FIG. 2 are a side view and a plan view, respectively, illustrating a schematic structure of a battery cell 1 according to an embodiment. FIG. 3 and FIG. 4 are a plan view and a side view, respectively, illustrating a schematic structure of a module battery 100 (i.e., a main body thereof) according to the embodiment. FIG. 5 is a block diagram regarding temperature control of the module battery 100.

As illustrated in FIG. 1, the battery cell 1 is a high-temperature operating secondary battery having a structure in which a side surface (side circumference) of a cylindrical battery body 1a with a bottom is annularly sheathed by a cylindrical sheath 1b that is coaxial with the battery body 1a. The battery body 1a is made of metallic sodium (Na) and sulfur (S) as active materials, using beta-alumina that is a solid electrolyte with Na ion conductivity as a separator that separates metallic sodium (Na) from sulfur (S). A positive terminal 1p protrudes from the outer edge of one of the ends of the battery body 1a, and a negative terminal 1n protrudes from the center of the end.

In addition, a pipe (a hollow metal wire rod or a thin pipe) made of a metal (e.g., copper, or aluminum, etc., is acceptable) is wound around an external side surface of the battery cell 1 to form a coil 10.

The sheath 1b includes a cylindrical metal part 5 in contact with an external side surface (made of alumina) of the battery body 1a, and an insulating part 6 that is also cylindrical and is in contact with an external side surface of the metal part 5. The metal part 5 further has a two-layer structure in which an inner pipe 5a and an external pipe 5b are concentrically laminated.

The inner pipe 5a is also referred to as a sleeve pipe, and is a cylindrical component made of a metal (e.g., a stainless steel) for preventing (constraining) deformation of the battery body 1a that becomes hot during use and standby of the module battery 100. The inner pipe 5a should have a thickness approximately ranging from several hundred µm to several mm to attain the aforementioned objective.

The external pipe 5b is a cylindrical component made of a metal (e.g., steel) to be used as a heat source when the battery cell 1 (i.e., the battery body 1a annularly sheathed by this external pipe 5b) is heated during standby of the module battery 100.

Specifically, the coil 10 is formed around the external side surface of the battery cell 1 as described above. A heating power supply 20 that is a predetermined AC power supply (AC current generator) included in the module battery 100 allows a high-frequency AC current to pass between two ends 10a and 10b (also hereinafter referred to as both of the ends 10a and 10b) of the coil 10 to generate an eddy current, so that the external pipe 5b is induction-heated by the eddy current. This induction-heated external pipe 5b acts as a heat source to heat the battery cell 1 as a heat source. Not only the external pipe 5b but also the inner pipe 5a may be induction-heated to contribute to the heating of the battery cell 1.

The thickness of the external pipe 5b, the thickness of the pipe and the number of turns of the coil 10, and the like may be appropriately defined so that the battery cell 1 is suitably heated through the induction heating. The external pipe 5b is normally provided to have a thickness large enough to obtain a mass of the external pipe 5b with which the heat capacity of the external pipe 5b is equal to that of the battery cell 1 to be heated. The exemplified external pipe 5b satisfying such a condition has an outside diameter of approximately 100 mm and a thickness of approximately 3 mm.

The two-layer structure of the metal part 5 having the inner tube 5a and the external tube 5b is not an essential aspect. The metal part 5 may be a single cylindrical component made of a metal and having performance required for each of the inner tube 5a and the external tube 5b. In other words, the metal part 5 that is a single cylindrical component may have both of a function of constraining deformation of the battery body 1a and a function as a heat source of the battery cell 1.

The insulating part 6 is a cylindrical component mainly made of an insulator (e.g., mica) for insulating the metal part 5 from the coil 10. The insulating part 6 is provided to have a thickness with which the insulation is suitably obtained and which does not interfere with induction-heating the external pipe 5b.

As illustrated in FIG. 3, in this embodiment, the module battery 100 is constituted by a plurality of the battery cells 1 (also referred to as a battery assembly) each of which has the aforementioned structure and which are contained in a storage container 30.

The storage container 30 is generally a cuboid container whose external surfaces 31a and whose inner surfaces 31b are each made of a metal plate. A heat-insulating material 32 fills portions between the metal plates on the side surfaces and at the bottom surface. In the following description, a pair of the external surfaces 31a and a pair of the inner surfaces 31b of the storage container 30 along the long-side direction in a plan view will be referred to as external surfaces 31a1 and inner surfaces 31b1, respectively, and a pair of the external surfaces 31a and a pair of the inner surfaces 31b along the short-side direction in the plan view will be referred to as external surfaces 31a2 and inner surfaces 31b2, respectively. Furthermore, the bottom and the sides (side portions) of the storage container 30 are supported by a support frame 33.

As illustrated in FIGS. 3 and 4, a blower 41 (41a or 41b), and a duct 42 (42a or 42b) that is continuous with the blower 41 are affixed to each of the pair of external surfaces 31a1 of the storage container 30. The storage container 30 includes a temperature sensor 35 (FIG. 5) at an appropriate portion, though FIGS. 3 and 4 omit the illustration. The temperature sensor 35 can monitor the temperature inside the storage container 30. A known temperature sensor is available as the temperature sensor 35. The number, the arrangement position, the type, and the like of the temperature sensor(s) 35 may be appropriately defined as long as the temperature sensor 35 does not interfere with operations of the module battery 100 and can measure a desired temperature with high precision.

Specifically, the storage container 30 includes a lid that is not illustrated at the top to ensure the heat insulation of the storage container 30. The lid has a structure in which external surfaces and inner surfaces are each made of a metal plate and a heat-insulating material fills the inner portion, similarly to the storage container 30. Furthermore, a sand material fills an interspace other than objects placed in the storage container 30. The sand material fills the interspace to reduce the impact on the surrounding of the battery cells 1 in case the battery cells 1 have malfunctions such as a fracture, being abnormally heated, and leakage of the active materials. Examples of the sand material include expanded vermiculite (vermiculite) and silica sand.

The storage container 30 and the lid adopt not a vacuum insulation structure but preferably an atmospheric insulation structure in view of making facilitation of maintaining the heat insulated structure compatible with highly insulating properties. A lower thermal conductivity of the heat-insulating material is preferable in view of ensuring sufficient heat insulation performance in the atmospheric insulation structure. More preferably, the thermal conductivity is lower than or equal to 20mW/m·K that is half or less than the thermal conductivity of general glass wool insulation. In such a case, the insulating properties necessary for operations of the module battery 100 is ensured without excessively increasing the thicknesses of the storage container 30 and the lid, compared to the case where the vacuum insulation structure is adopted.

In the module battery 100 according to the embodiment, the battery cells 1 each of which is cylindrical are arranged in two rows along the long-side direction in the plan view and contained in the storage container 30 in an attitude such that the end including the positive terminal 1p and the negative terminal 1n is located at the top. In FIG. 3, eight of the battery cells 1 are arranged per row. In other words, the shape of the storage container 30 is defined according to the arrangement of the battery cells 1.

In the storage container 30, for each pair of the battery cells 1 arranged adjacent to each other, the positive terminal 1p of one battery cell 1 is electrically connecting to the negative terminal 1n of the other battery cell 1 through a connection terminal C1, thereby to form a circuit (string) in which a plurality of the battery cells 1 are connected in series. FIG. 3 illustrates only a part of the connection terminals C1.

Furthermore, an external connection terminal C2 is connected to each of four of the battery cells 1 arranged at the ends of the storage container 30 for establishing external electrical connection outside the storage container 30. The external connection terminals C2 penetrate the sides of the storage container 30 to the outside. Specifically, the penetration is made while the electrical insulation between the external connection terminals C2 and both of the external surfaces 31a1 and the inner surfaces 31b1 of the storage container 30 is ensured.

Furthermore, each of the ends 10a and 10b of the coil 10 formed around the external side surface of the battery cell 1 penetrates the side of the storage container 30 to the outside. This penetration is also made while the electrical insulation between the coil 10 and both of the external surfaces 31a1 and the inner surfaces 31b1 of the storage container 30 is ensured.

Specifically, the one end 10a protrudes into the duct 42. In other words, the end 10a is covered with the duct 42. In contrast, the other end 10b is exposed outside of the storage container 30. In addition, both of the ends 10a and 10b of the coil 10 wound around the external side surface of each of the battery cells 1 are connected to the heating power supply 20 provided outside of the storage container 30, though FIGS. 3 and 4 omit the illustration.

As described above, the coil 10 is formed by winding the hollow pipe. Thus, the heating power supply 20 allows a current to pass through the coil 10. Moreover, a fluid can be passed through inside the coil 10. In other words, the coil 10 through which a current is allowed to pass and a fluid can be circulated inside (the pipe) between the ends 10a and 10b is wound around the battery body 1a in the battery cell 1 according to the embodiment.

In the module battery 100 according to the embodiment, with application of the aforementioned structure, the coil 10 individually heats each of the battery cells 1 through the induction heating during standby. In charge/discharge, the blowers 41 are driven to supply a cooled gas at room temperature or a low temperature (e.g., air at room temperature) from outside into the ducts 42, so that the cooled gas can be forcibly introduced, to inside the coil 10, from the one end 10a protruding into the duct 42, and then, can be discharged from the other end 10b. In the former, heating the respective battery cells 1 under the same conditions during standby makes the temperature distribution in the storage container 30 uniform. In the latter, the cooled gas flowing through inside the coils 10 removes the heat generated in charge/discharge in the battery cells 1 around which the respective coils 10 are wound, thus making the temperature distribution in the storage container uniform.

In other words, the module battery 100 according to the embodiment allows all the battery cells 1 contained in the storage container 30 to be individually heated during standby and exhaust the heat in charge/discharge. This can stably ensure the uniformity of the temperatures in the battery cells 1 both during standby and in charge/discharge.

Since each of the battery cells 1 is directly heated by allowing a current to pass through the coil 10, the battery cells 1 can be efficiently heated more than those of the conventional module batteries. Thus, the module battery 100 according to the embodiment can be heated with less power than the conventional module batteries. This enables the module battery 100 according to the embodiment to ensure sufficient insulating properties while adopting the atmospheric insulation structure.

Moreover, since the plurality of battery cells 1 in the module battery 100 according to the embodiment are contained in the storage container 30 in two rows as illustrated in FIG. 3, all the battery cells 1 are adjacent to the storage container 30. In other words, the module battery 100 does not have the battery cell 1 enclosed by only the other battery cells 1, unlike the conventional module battery in which battery cells are arranged in multiple rows and columns and contained in a storage container. Thus, the module battery 100 according to the embodiment structurally has no problem in that a battery cell disposed at the outer edge and a battery cell disposed at the center inside a storage container have a temperature difference as occurs in the conventional module batteries. In other words, a way of containing the battery cells 1 in the module battery 100 according to the embodiment renders an advantage of further stabilizing the uniformity of the temperatures in the storage container 30.

In the case illustrated in FIG. 3, the storage container 30 merely contains eight of the battery cells 1 per row, that is, 16 of the battery cells 1 in two rows in total. The number of the battery cells 1 contained in the storage container 30 is much less than those of the conventional module battery in which battery cells are contained in multiple rows and columns in one storage container. For example, Patent Document 1 exemplifies a case where 12 × 22 = 264 battery cells are contained in one storage container. This means that the output of the single module battery 100 according to the embodiment is significantly smaller than those of the conventional module batteries. Although the output can be obviously increased by increasing the number of battery cells per row in the module battery 100 according to the embodiment, this support has a limitation in terms of the shape (aspect ratio) of the storage container.

However, this problem can be solved by preparing a plurality of the module batteries 100 and appropriately connecting, in series and in parallel, pluralities of the battery cells 1 (i.e., a battery assembly) respectively contained in the storage containers 30 thereof each as one connection unit, thereby to obtain the output equivalent to those of the conventional module batteries.

Preferably, the storage container 30 is structured to be two-dimensionally or three-dimensionally connectable (coupled or stacked). Using this structure, the plurality of module batteries 100 are disposed with a footprint or an occupied volume equivalent to those of the conventional module batteries each containing multiple battery cells in one storage container. In this case, each of the module batteries 100 includes the storage container 30 with a heat insulated structure, and the uniformity of the temperatures in the storage containers 30 during standby and in charge/discharge can be independently ensured. Thus, the module batteries 100 each with the footprint or the occupied volume equivalent to those of the conventional module batteries have no problem in non-uniformity of the temperatures.

Rather, the module battery 100 according to the embodiment is superior in terms of the stability of the uniformity of the temperatures in the storage container to the conventional module batteries. Thus, the module battery 100 according to the embodiment can operate with higher output with which the conventional module batteries cannot operate due to the non-uniformity of the temperatures.

### <Temperature control in module battery>

FIG. 5 is a block diagram regarding temperature control of the module battery 100. A controller 50 of the module battery 100, which is separately provided from the main body illustrated in FIGS. 3 and 4, controls the temperature of the module battery 100 during standby and in charge/discharge.

The controller 50 mainly includes a battery operation control part 51 that controls operations of the module battery 100 during standby or in charge/discharge, and a temperature control part 52 that controls the temperature of the storage container 30 both during standby and in charge/discharge. The controller 50 can be implemented by causing a dedicated or general-purpose computer (not illustrated) including a CPU, a memory, and a storage to execute a predetermined operating program. The battery operation control part 51 and the temperature control part 52 are implemented as virtual constituent elements in the computer.

The temperature control part 52 includes a blower control part 53 and a heating control part 54. The blower control part 53 and the heating control part 54 control operations of the blowers 41a and 41b included in the pair of external surfaces 31a1 of the storage container 30 and operations of the heating power supply 20 that heats the coil 10 provided in each of the battery cells 1, respectively, according to output signals from the temperature sensor 35 included in the storage container 30. In FIG. 5, the coils 10 <1> to 10 <16> denote the coils 10 included in 8 × 2 rows = 16 of the battery cells 1, corresponding to the module battery 100 illustrated in FIG. 3. The heating power supplies 20 <1> to 20 <16> denote the heating power supplies 20 connected to the respective coils 10 <1> to 10 <16>. The heating power supplies 20 need not be provided one-to-one for the coils 10. The single heating power supply 20 may apply a voltage to a plurality of the coils 10.

Generally speaking, through controlling ON/OFF of blowing operations by the blowers 41 (41a and 41b) under control of the blower control part 53, the cool of the battery cells 1 that generate heat from reaction of the active materials in charge/discharge is performed. During standby, through controlling ON/OFF of current conduction operations by the heating power supplies 20 under control of the heating control part 54, the temperatures of the battery cells 1 in the storage container 30 is maintained at predetermined wait temperatures (e.g., approximately 300°C).

Accordingly, the storage container 30 is uniformly maintained at a desired temperature both during standby and in charge/discharge in the module battery 100 according to the embodiment.

As described above, according to the embodiment, forming a coil by winding a pipe made of a metal around an external side surface of each of battery cells contained in a storage container of a module battery for a high-temperature operating secondary battery and allowing a current to pass through the coil enable a metal part included in a sheath of the battery cell to be inductively heated. At the same time, circulation of a cooled gas through inside the pipe can exhaust the heat from the battery cells. Thus, the battery cells contained in the storage container can be individually heated during standby, and the heat can be individually exhausted from the battery cells in charge/discharge.

This implements a module battery with high uniformity of the temperatures in the storage container both during standby and in charge/discharge.

In addition, containing all the battery cells in the storage container to be adjacent to the storage container without any battery cell enclosed by only the other battery cells implements a module battery with higher uniformity of the temperatures in the storage container.

### <Modifications>

According to the above embodiment, the coil 10 is a pipe made of a metal, and a current is allowed to pass and a cooled gas can be circulated between the ends 10a and 10b of the coil 10. Even when the coil 10 is a solid conductive wire rod (made of a metal or other materials) and can only be heated by allowing a current to pass through the coil 10, the same advantages as those according to the embodiment can be obtained during standby. In such a case, an appropriate alternative for cooling in charge/discharge may be adopted. At least, the effect and the advantage of ensuring the uniformity of the temperatures in the storage container 30 by containing the battery cells 1 in two row can be obtained to some extents by suitably determining the size and performance of each of the battery cells 1, the heat insulation performance of the storage container 30, and the like.

## Claims

1. A battery cell that is a high-temperature operating secondary battery, the battery cell comprising:
a cylindrical main body including a positive part and a negative part;
a sheath annularly sheathing the main body, the sheath including at least a cylindrical metal part and an insulating part annularly sheathing an external side surface of the metal part; and
a coil of a conductive wire rod wound around an external side surface of the insulating part.

2. The battery cell according to claim 1,
wherein the metal part has a two-layer structure including:
an inner pipe being in contact with an external side surface of the main body to constrain deformation of the main body; and
an external pipe being in contact with an external side surface of the inner pipe, and
in the metal part, at least the external pipe is configured to be induction-heated by allowing a high-frequency AC current to pass between both ends of the coil.

3. The battery cell according to claim 1 or 2,
wherein the wire rod is a hollow pipe made of a metal.

4. A module battery for a high-temperature operating secondary battery, the module battery comprising:
a storage container with a heat insulated structure;
a plurality of battery cells contained in the storage container, each of the plurality of battery cells being the battery cell according to any one of claims 1 to 3; and
at least one high-frequency AC current generator allowing a high-frequency AC current to pass through the coil included in each of the plurality of battery cells,
wherein the metal parts are induction-heated by allowing the high-frequency AC current to pass through the coils using the at least one high-frequency AC current generator, and
all the plurality of battery cells are adjacent to the storage container in the storage container.

5. A module battery for a high-temperature operating secondary battery, the module battery comprising:
a storage container with a heat insulated structure;
a plurality of battery cells contained in the storage container, each of the plurality of battery cells being the battery cell according to claim 3;
at least one high-frequency AC current generator allowing a high-frequency AC current to pass through the coil included in each of the plurality of battery cells;
a duct affixed to a side of the storage container; and
a blower that can supply a cooled gas to the duct,
wherein the metal parts are induction-heated by allowing the high-frequency AC current to pass through the coils using the at least one high-frequency AC current generator,
one end of the coil penetrates the side of the storage container to extend into the duct,
the other end of the coil penetrates the side of the storage container to extend outside, and
circulation of the cooled gas supplied by the blower through inside the coil exhausts heat generated by each of the plurality of battery cells.

6. The module battery according to claim 5,
wherein all the plurality of battery cells are adjacent to the storage container in the storage container.
